# EUROPEAN PATENT APPLICATION

(11) **EP 1 083 729 A2**
(43) Date of publication of application: **14.03.2001**
(21) Application number: 00118297.1
(22) Date of filing: 06.09.2000
(51) Int. Cl.: H04M 3/00, H04M 19/00

(54) **Subscriber line interface circuit**

(30) Priority: 08.09.1999 JP 25373399
(71) Applicant: NEC CORPORATION, Tokyo (JP)
(72) Inventor: Sudo, Minoru, Minato-ku, Tokyo (JP)
(74) Representative: Baronetzky, Klaus, Dipl.-Ing.

(57) **Abstract**

A subscriber line interface circuit can achieve accommodation of subscribers of a plurality of circuits (down-sizing) and low cost. The subscriber line interface circuit includes a first integrated circuit including speaking power supply means for supplying an electrical power to a telephone set and A/D converter means for converting an analog voice signal output from the telephone set into a digital signal, the first integrated circuit being independent for each channel, and a single second integrated circuit including multiplexing multiplexing the digital signal from the A/D converter means of each of the first integrated circuit and digital signal processing means for digital-signal-processing of the multiplexing means.

## Description

### BACKGROUND OF THE INVENTION

### Field of the Invention

The present invention relates generally to a subscriber line interface circuit. More particularly, the invention relates to a solid-state subscriber line interface circuit using a high voltage large scale integration (LSI) and a low voltage LSI.

### Description of the Related Art

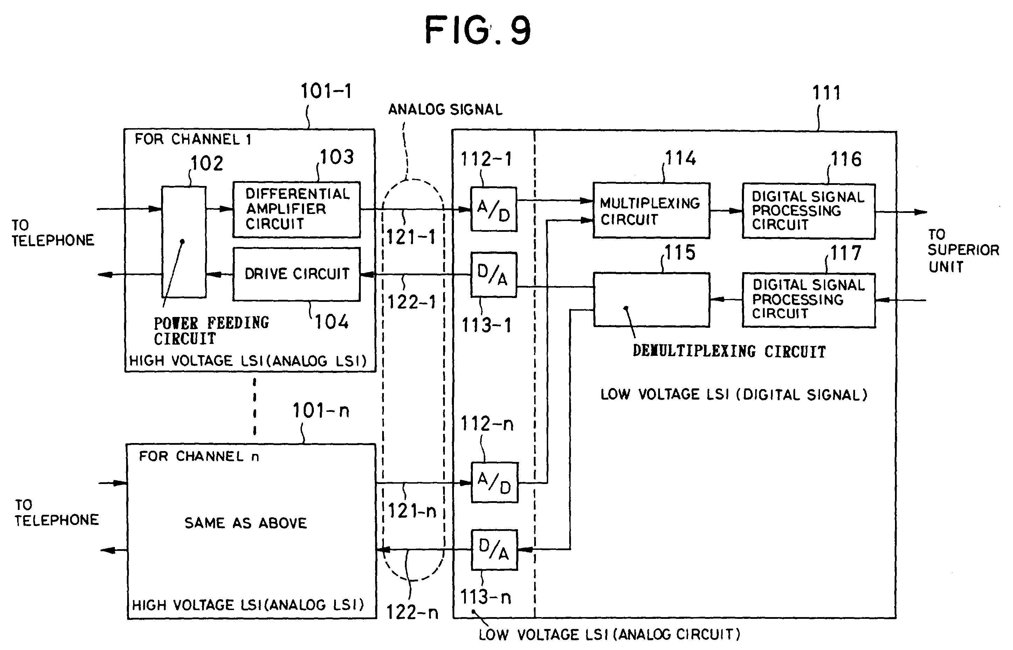

Fig. 9 shows one example of a construction of the conventional subscriber line interface circuit. Referring to Fig. 9, a subscriber line interface circuit realizing accommodating n in number (n is integer greater than or equal to 2) of subscribers is constructed with high voltage LSIs 101-1 to 101-n for n channels and one low voltage LSI 111. The high voltage LSI is operable by -48V system as a voltage of driving power source (power supply, ringing signal and so forth) of a switching equipment, and is used in a partial circuit loaded such voltage. The low voltage LSI is operated by a power source of +5V system of TTL level and is used in a circuit of the portion performing internal logic process operation of the switching equipment.

Then, the high voltage LSI 101-1 includes a power feeding circuit 102 feeding current to a telephone set connected to a telephone set of the subscriber, a differential amplifier circuit 103 receiving a voice signal from the telephone set via the power feeding circuit 102 and amplifying the same and a driver circuit 104 for receiving a voice signal from the low voltage LSI 111 and driving terminals Tip and Ring (not shown) via the power feeding circuit 102. The high voltage LSI 101-1 is constructed with an analog LSI. It should be noted that the construction of the high voltage LSI 101-n is similar to that of the high voltage LSI 101-1 and thus, discussion will be omitted.

On the other hand, the low voltage LSI 111 includes A/D converters (hereinafter also referred to as A/D) 112-1 to 112-n for n channels, D/A converters (hereinafter also referred to as D/A) 113-1 to 113-n for n channels, one set of multiplexing circuit 114, a demultiplexing circuit 115 and digital signal processing circuits 116 and 117. In the low voltage LSI 111, the A/D converters 112-1 to 112-n and the D/A converters 113-1 to 113-n are formed by analog circuits, and one set of multiplexing circuit 114, the separation circuit 115 and the digital signal processing circuits 116 and 117 are formed by digital circuits.

A voice signal from the differential amplifier circuit 103 of the channel 1 is converted from an analog signal to a digital signal by the A/D 112-1, multiplexed for n channels by the multiplexing circuit 114, digital-signal-processed by the digital signal processing circuit 116 and then output to a superior unit (not shown). On the other hand, n channels of digital signals from the superior unit is digital-signal-processed by the digital signal processing circuit 117, and separated into the digital signal for each channel by the demultiplexig circuit 115. Then, the digital signal for the channel 1 is input to D/A 113-1.

The digital signal is then converted into the analog signal by the D/A 113-1 and subsequently input to the driver circuit 104 of the high voltage LSI 101-1. It should be noted that the voice signal from the differential amplifier 103 for the channel n is also multiplexed by the multiplexing circuit 114 via the A/D 112-n to be fed to the superior unit. Also, the multiplexed digital signal from the superior unit is separated by the demultiplexing circuit 115 in the manner similar to that set forth above. The separated digital signal for the channel n is input to the driver circuit 104 for the channel n via the D/A 113-n. Namely, the voice signal for the channel n is processed similar to the signal for the channel 1 by the low voltage LSI 111.

As set forth above, since the A/Ds 112-1 to 112-n and the D/As 113-1 to 113-n are constructed by analog LSI, analog signals may be fed through transmission lines 121-1 to 121-n and 122-1 t0 122-n between the high voltage LSIs 1101-1 to 1101-n and the low voltage LSI 111.

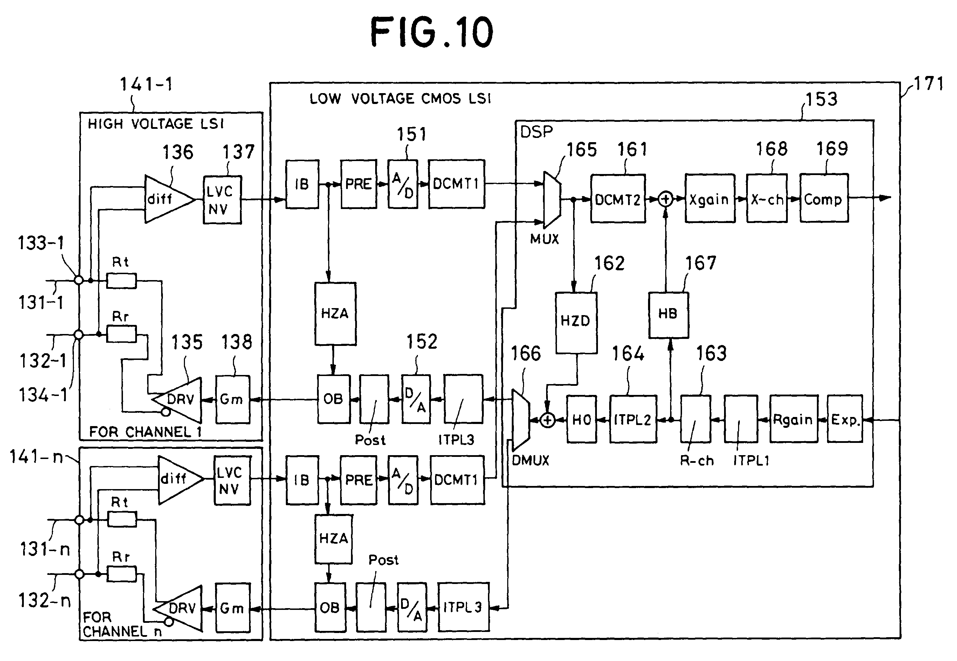

Next, particular construction of the conventional subscriber line interface circuit will be discussed. Fig. 10 is an illustration showing a particular construction of the conventional subscriber line interface circuit. Referring to Fig. 10, in the conventional subscriber line interface circuit, a Tip terminal 133-1 and a Ring terminal 134-1 are connected to a pair of telephone subscriber lines 131-1 and 132-1. Also, to the Tip terminal 133-1 and the Ring terminal 134-1, respective power feeding circuits (not shown), a driver circuit (DRV) 135, a differential signal detection circuit (diff) 136 in high voltage portion for taking out the signals of two lines in differential manner, a level shifting circuit (LVDNV) 137 converting the alternating current voice signal after eliminating direct current component from the differential signal into low voltage signal, and a voltage/current conversion circuit (Gm) 138 to be input of the driver circuit 135 are connected. These components are included in n high voltage LSIs 141-1 to 141-n (n=about 2 to 4) respectively. Furthermore, in subscriber line interface circuit, over-sampling type A/D converters (A/Ds)151 and D/A converters 152 for n circuits, a decimation circuit (DCMT1) 161 thinning with down-sampling an output of the A/D converter 151 in time division (by multiplexer (MUX) 165) by a common digital signal processor (DSP) 153, an interpolator circuit (ITPL2) 164 decoding a received PCM signal via a terminal impedance synthesizing circuit (HZD) 162 and up-sampling a signal derived by summing a reception side signal through a reception channel filter (Rch) 163, a demultiplexer (DMUX) 166 demultiplying a signal output from a terminal impedence synthesizing circuit (HZD) 162 are included. These components are included in a low voltage LSI voltage LSI 171 (1/n).

The signal from the decimation circuit 161 of the low voltage circuit LSI 171 passes through a hybrid circuit (HB) 167 (subtracter) suppressing sneaking of the signal input from four line side to be a PCM interface output signal to the superior unit via transmission CODEC function (transmission channel filter (Xch) 168 and A/µ coding portion (Comp) 169).

Here, the differential amplifier circuit 103 and the driver circuit 104 of Fig. 9 respectively correspond to the differential signal detecting circuit (diff) 136 and the driver circuit (DRV) 135 of Fig. 10. The A/D 112, the D/A 113, the multiplexing circuit 114 and the separation circuit 115 of Fig.9 respectively correspond to the A/D 151, the D/A 152, the multiplexer (MUX) 165 and demultiplexer (DMUX) 166 of Fig. 10. The digital signal processing circuits 116 and 117 of Fig. 9 correspond to a circuit which is formed by omitting MUX 165 and DMUX 166 from the DSP 153.

Other examples of the prior art of this type have been disclosed in Japanese Unexamined Patent Publication No. Showa 60 (1985)-72458 (hereinafter referred to as reference 1), Japanese Unexamined Patent Publication No. Heisei 10(1998)-65838 (hereinafter referred to as reference 2), Japanese Unexamined Patent Publication No. Heisei 10 (1998)-336711 (hereinafter referred to as reference 3), Japanese Unexamined Patent Publication No. Heisei 11 (1999)-75226 (hereinafter referred to as reference 4), and Japanese Examined Patent Publication No. Heisei 4 (1992)-39958 (hereinafter referred to as reference 5).

A technology disclosed in the reference 1 is directed to realize individually installed detector with lesser hardware by a time division multiplexing process. A technology disclosed in the reference 2 is directed to built-in a reverse polarity circuit without causing increasing of scale of the circuit. A technology disclosed in the reference 3 makes major portion of the analog subscriber line interface circuit and digital subscriber line interface circuit in common. A technology disclosed in the reference 4 has a construction, in which a signal output portion is constructed with a low voltage amplifier and a bias portion is constructed with a high voltage amplifier. A technology disclosed in the reference 5 forms the subscriber line interface circuit with the low voltage integration circuit.

Referring to Fig. 9, the first problem is that since A/Ds 112 and D/As 113 are provided for n circuits in the low voltage 111, if multiplexing ratio of CODEC function is to be increased, an analog circuit region of the low voltage LSI 111 becomes large to cause difficulty of down-sizing.

The second problem is that in viewpoint of characteristics, since analog circuit is increased, influence of cross talk from other circuit cannot be ignored. Namely, referring to Fig. 9, since analog signal is transmitted through the transmission lines 121 and 122 connected between the high voltage LSI 101 and the low voltage LSI 111, it easily cause cross talk between respective circuits. Then, in order to avoid cross talk, area of the low voltage LSI has to be made greater. Therefore, it cannot be expected to increase package density. Accordingly, approximately n = 2 to 4 has been limit, and multiplexing degree of approximately n = 100 cannot be expected.

### SUMMARY OF THE INVENTION

It is an object of the present invention to provide a subscriber line interface circuit which can achieve accommodation of subscribers of a plurality of circuits (down-sizing) and low cost.

According to the first aspect of the present invention, a subscriber line interface circuit comprises:
a first integrated circuit including speaking power supply means for supplying an electrical power to a telephone set and A/D converter means for converting an analog voice signal output from the telephone set into a digital signal, the first integrated circuit being independent for each channel; and
a single second integrated circuit including multiplexing means for multiplexing the digital signal from the A/D converter means of each of the first integrated circuit and digital signal processing means for digital-signal-processing of the multiplexing means.

With the preferred construction, the first integrated circuit is constructed with a high voltage LSI and the second integrated circuit is constructed with a low voltage LSI. Preferably, A/D converter means is constructed with an A/D converter for converting an analog voice signal into a digital signal and a decimation circuit for thinning an output of the A/D converter with down-sampling. In the alternative, the A/D converter means is constructed with an A/D converter for converting an analog voice signal into a digital signal, and the multiplexing means is constructed with a decimation circuit per channel for thinning an output of the A/D converter of the first integration circuit with down-sampling, and a multiplexing circuit for multiplexing outputs of respective decimation circuits.

Also, the second integration circuit may include a plurality of pairs of the multiplexing means and the digital signal processing means. A connection between the A/D converter means and the digital signal processing means is a bus construction in place of the multiplexing means.

The first integrated circuit may be provided with a switch pair for opening a channel and a call signal transmission switch pair in branch connection on the side of the channel of the switch pair.

According to the second aspect of the present invention, subscriber line interface circuit comprises:
a first integrated circuit separately provided for each channel and including signal driving means for driving an analog voice signal from a former stage to transmit to a telephone set and an D/A converter for converting a digital signal from a former stage into an analog voice signal for feeding to the signal driving means; and
a second single second integrated circuit including separating means for separating a digital multiplexed signal from a former stage into each signal for each channel for feeding to each of the D/A converters and digital signal processing means for performing digital signal processing of the digital multiplexed signal from a former stage for feeding to the separating means.

Preferably, the first integration circuit is constructed with a high voltage LSI and the second integration circuit is constructed with a low voltage LSI. The D/A converting means may be constructed with a D/A converter converting the digital signal into the analog voice signal, and an interpolator circuit up-sampling the output from the separation means with interpolation for feeding to the D/A converter. In the alternative, D/A converting means is constructed with a D/A converter converting the digital signal into the analog voice signal, the separation means is constructed with the interpolation circuit up-sampling an output from the former stage with interpolation for feeding to the D/A converter and a separation circuit for separating a digital multiplexed signal from the former stage per channel for feeding to the interpolator circuit. The second integration circuit may include a plurality of pairs of the separation means and the digital signal processing means.

The connection between the separation circuit and the digital signal processing means may be established by a bus construction in place of the separation means. The first integration circuit may be provided with a switch pair for opening a channel and a ringing signal sending switch pair in branch connection on the side of the channel of the switch pair.

A digital signal processing means is connected with storage means per each channel, in the storage means, a coefficient of various digital filters unique to each channel to be used in the digital signal processing means, and a coefficient value of various digital filter means unique to each channel, in the signal from the former stage, a program code re-writeable of is multiplexed.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig, 1 is a block diagram showing a construction of the preferred embodiment of a subscriber line interface circuit according to the present invention;
Fig. 2 is a block diagram showing the first embodiment of the subscriber line interface circuit according to the present invention;
Fig. 3 is a partial circuit diagram of a subscriber line interface circuit including a power feeding circuit;
Fig. 4 is a block diagram showing the third embodiment of the subscriber line interface circuit according to the present invention;
Fig. 5 is a block diagram showing the fifth embodiment of the subscriber line interface circuit according to the present invention;
Fig. 6 is a block diagram showing the sixth embodiment of the subscriber line interface circuit according to the present invention;
Fig. 7 is a block diagram showing the seventh embodiment of the subscriber line interface circuit according to the present invention;

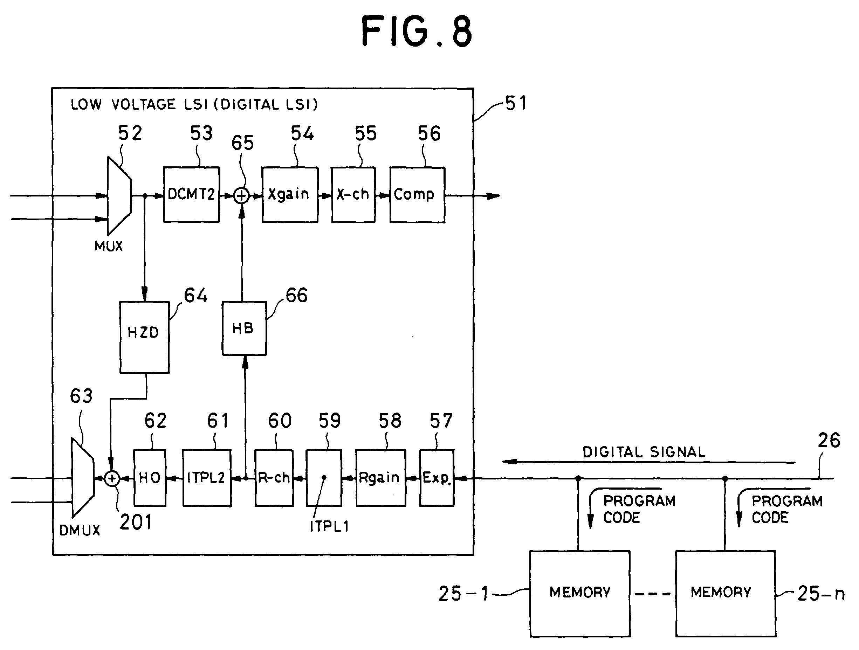

Fig. 8 is a block diagram showing the eighth embodiment of the subscriber line interface circuit according to the present invention;
Fig. 9 is a block diagram showing one example of the conventional subscriber line interface circuit; and
Fig. 10 is a block diagram showing particular construction of the conventional subscriber line interface circuit.

### DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structure will not be shown in detail in order to avoid unnecessary obscurity of the present invention.

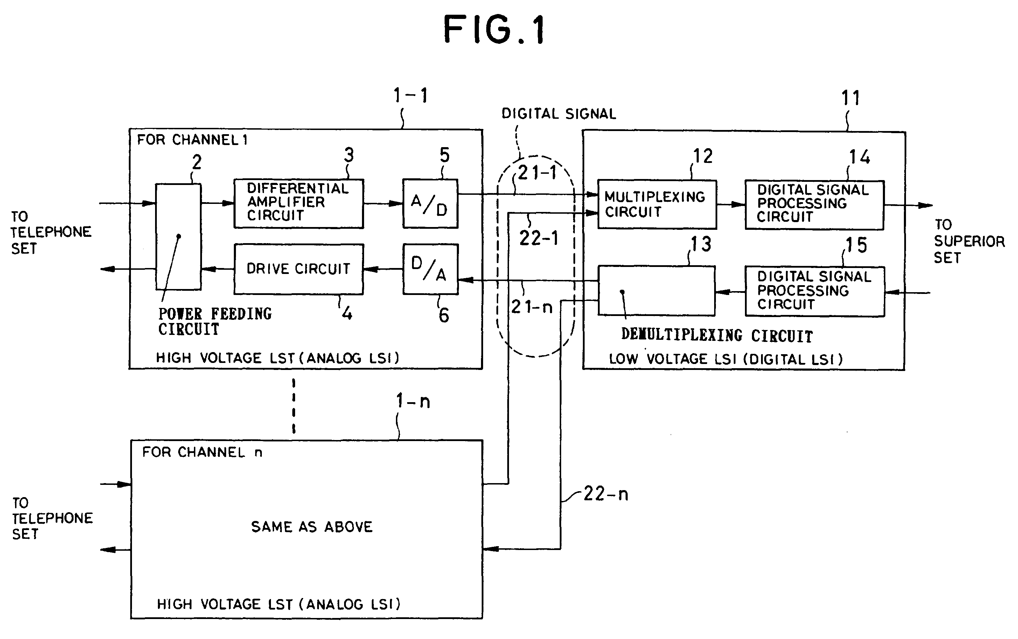

Fig. 1 is a block diagram showing the preferred embodiment of a subscriber line interface circuit according to the present invention. Referring to Fig. 1, the shown embodiment of a subscriber line interface circuit is constructed with high voltage LSI 1-1 to 1-n provided for each circuit and one low voltage LSI 111. Each high voltage LSI 1-1 to 1-n is an analog LSI including a power feeding circuit 2, a differential amplifier circuit 3, a driver circuit 4, an A/D 5 and a D/A 6. On the other hand, a single low voltage LSI 11 is a digital LSI including one set of multiplexing circuit 12, a separation circuit 13, a digital signal processing circuits 14 and 15.

A voice signal from the differential amplifier circuit 3 of a channel 1 is converted from an analog signal to a digital signal by the A/D 5. After multiplexing for n channels by the multiplexing circuit 12, digital signal processing is performed by the digital signal processing circuit 14, and then output to a superior unit (not shown).

On the other hand, the digital signal for n channels from the superior unit is digital-signal-processed by the digital signal processing circuit 15. Then, the digital signal processed by the digital signal processing circuit 15 is separated into digital signal for each channel by the demultiplexing circuit 13. Then, the digital signal for the channel 1 is input to the D/A 6. Then, the digital signal is converted into the analog signal by the D/A 6 and thereafter input to the driver circuit 4.

On the other hand, the voice signal from the differential amplifier circuit 3 for the channel n is multiplexed by the multiplexing circuit 12 via A/D 5 for the channel n and the digital signal for the channel n separated by the demultiplexing circuit 13 is input to the drive circuit 104 for the channel n via the D/A 6 for the channnel n. Namely, the voice signal for the channel n is processed similarly to the signal for the channel 1 set forth above.

As shown in Fig. 1, since one low voltage LSI 111 does not include A/D 5 and the D/A 6, even if the multiplexing ratio of the CODEC function is increased, scale of the low voltage LSI will not become large. Namely, down-sizing of the low voltage LSI 11 becomes possible.

Furthermore, as shown in Fig. 1, through transmission lines 21-1 to 21-n and 22-1 to 22-n connecting the high voltage LSI 1-1 to 1-n and the low voltage LSI 11, digital signal is transmitted. The reason is that signal fed between the A/D 5 and the multiplexing circuit 12 and the signal fed between the D/A 6 and the demultiplexing circuit 13 are also digital signal. As set forth above, since the digital signal is transmitted through the signal lines 21-1 to 21-n and 22-1 to 22-n, a construction having little influence of cross talk from the analog circuit of other channels can be realized in the low voltage LSI 11. Particularly, since improvement of processing capacity of the low voltage LSI (digital LSI) is substantial, multiplexing degree n = 100 or higher can be achieved. Then, realization cost per one channel of the low voltage LSI (digital LSI) becomes about 1/100.

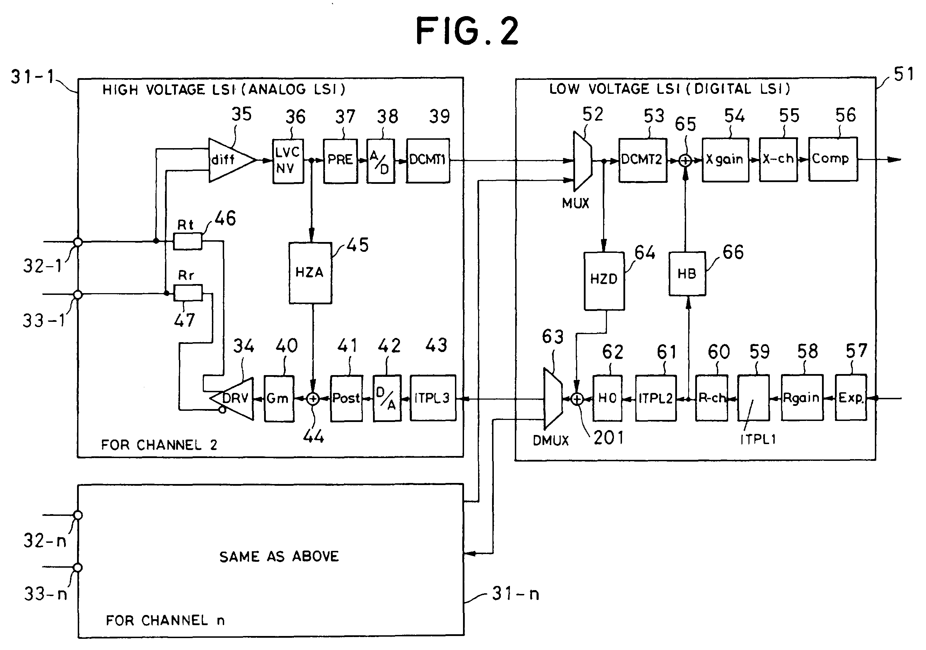

Hereinafter, discussion will be given for embodiments of the present invention. At first, the first embodiment of the subscriber line interface circuit according to the present invention will be discussed. Fig. 2 is a block diagram showing the first embodiment of the subscriber line interface circuit according to the present invention. Referring to Fig. 2, the subscriber line interface circuit is constructed with high voltage LSI (analog LSI) 31-1 to 31-n and single low voltage LSI (digital LSI) 51.

The high voltage LSI 31-1 is constructed with a Tip terminal 32-1 and a Ring terminal 33-1 connected to a pair of telephone subscriber lines, a power feeding circuit of a high voltage portion supplying a current for speaking to the Tip terminal 32-1 and the Ring terminal 33-1, a driver circuit (DRV) 34, a differential signal detection circuit (diff) 35 of the high voltage portion taking out signals of two lines in differential manner, a level shifting circuit (LVCNV) 36 for converting an alternating current voice signal after removal of direct current component from the differential signal into a low voltage signal adapted for the low voltage circuit, a pre-filter (PRE) 37 passing a component of a predetermined frequency among an output of the level shifting circuit 36, an over-sampling type A/D converter circuit 38 of the low voltage portion for performing A/D conversion of the output of the pre-filter 37, a decimation circuit (DCMT1) 39 thinning the output of the A/D converter circuit 38 with down sampling, a voltage/current conversion circuit (gm) 40 to be an input of the driver circuit 34, a post filter (Post) 41 to be an input of the voltage/current conversion circuit (gm) 40, a D/A converter 42 to be an input for the post filter 41, an interpolator circuit (ITPL3) serving as input for the D/A converter 42 and up-sampling the signal input from the external terminal with interpolation, an adder circuit 44 connected between the voltage/current converting circuit 40 and the post filter 41, a terminal impedance synthesizing filter (HZA) 45 connected between the output of the level shifting circuit 36 and the adder circuit 44, a resistors (Rt) 46 and 47 connected between the driver circuit 34, and the Tip terminal 32-1 and the Ring terminal 33-1. It should be noted that the construction of the high voltage LSI 31-n is similar to that of the high voltage LSI 31-1 and thus, discussion therefor will be omitted.

The low voltage LSI 51 is constructed with a multiplexer (MUX) 52 multiplexing signals from the high voltage LSIs 31-1 to 31-n, a decimation circuit (DCMT2) 53, a transmission gain adjusting circuit (Xgain) 54, a transmission channel filter (Xch) 55, an A/µ code compressor (Comp) 56, an expander (Exp) 57 decoding a signal from the superior unit, a receiving gain adjusting circuit (Rgain) 58, an interpolator circuit (ITPL1) 59, a receiving channel filter (Rch) 60, an interpolator circuit (ITPL2) 61, a frequency characteristics correction circuit filter (HO) 62, a demultiplexer (DMUX) 63 separating multiplexed signal, an adder circuit 64 connected between the demultiplexer 63 and the frequency characteristics correction circuit filter 62, a terminal impedance synthesizing filter (HZD) 64 connected between the output of the multiplexer 52 and the adder circuit 201, an adder circuit 65 connected between the decimation circuit 53 and the transmission gain adjusting circuit 54, and a hybrid filter (HB) 66 connected between the output of the reception channel filter 60 and the adder circuit 65.

The low voltage LSI 51 is a DSP (digital signal processor) taking the output after A/D conversion by the A/D 38 as multiplexed for n channels by the multiplexer 52 and is constructed with a terminal impedance synthesizing circuit (HZD) 64, a hybrid circuit (HB) 66, a transmission gain adjustment circuit (Xgain) 54, a reception gain adjustment circuit (Rgain) 58, a transmission and reception CODRC function (transmission channel filter (Xch) 55, reception channel filter (Rch) 60, A/µ code compressor (Comp) 56 and expander (Exp) 57). Inputting and outputting of the input and output signal to the superior unit is performed by PCM interface.

Next, discussion will be given for operation of the first embodiment. The high voltage LSI 31 using mixed technology including a low voltage CMOS transistor circuit and a high voltage transistor circuit will be discussed as SOI (Silicon on Insulator). Discussion will be given in terms of a circuit constructed by the first high voltage SOI-LSI 31-1. A circuit constructed with a (n)th high voltage SOI-LSI 31-n is similar. What is only different is an absolute timing controlling taking the signal in DSP. Therefore, relative timing operation normalized by taking in timing is the same at any of (n)th circuit.

Referring to Fig. 2, the differential signal detection circuit (diff) 35 is typically constructed with differential amplifier. Therefore, a differential signal of the voice signal is taken by the differential signal detection circuit 35 in a form superimposing an offset of direct current voltage corresponding to a speaking current supplied to telephone set. The level shifting circuit (LVCNV) 36 takes out only voice signal removing the direct current component by the high-pass filter and adapts to an input level of the A/D converter 38, and at the same time, to be an input of the terminal impedance synthesizing filter (HZA) 45 feeding back synthesizing function of real number portion of the terminal impedance. The A/D converter 38 is constructed with a ΔΣ type over-sampling A/D . The output of the A/D converter 38 is a 1 bit data of 1 Mbps, and is thinned into 14 bit data of 64 KHz by the decimation circuit (DCMT1) 39.

The multiplexer (MUX) 52 takes input from the decimation circuit (DCMT1) 39 at a timing of n times of 64 KHz to the input of the DSP. The DSP performs various digital filter operation in time division. In order to realize hybrid circuit function with performing filter operation of the terminal impedance synthesizing filter (HZD) 64 of the subscriber channel, at sampling frequency of 64 KHz, the DSP further down-samples the output of the decimation circuit 39 at 64 KHz down to 32 KHz, and then is added by the adder 65 a resultant value derived by performing linear conversion of a reception signal of the PCM code input at a frequency of 8 KHz, after conversion into a desired reception level by the reception gain adjusting circuit (Rgain) 58, performing up-sampling at 16 KHz by the interpolator circuit (ITPL1) 59, and after passing through the reception channel filter (Rch), processing by the hybrid filter (HB) 66. The result of addition is adjusted to a desired reception level by the transmission gain adjusting circuit (Xgain) 54 and then converted into the PCM code by the compressor (Comp) 56 through the transmission channel filter (Xch) 55. The output of the reception channel filter (Rch) 60 is up-sampled to 64KHz by one interpolator (ITPL2) 61 and is added with the output of the impedance synthesizing circuit (HZD) 64 via the frequency characteristics correction circuit (H0) 62.

A result of addition is transferred via the demultiplexer (DMUX) 63 to the interpolator circuit (ITPL3) 43 of the high voltage LSI 31-1 to 31-n at a predetermined timing among data for n channels output from the DSP. Then, the result of addition input to the interpolator circuit (ITPL3) 43 of the high voltage LSIs 31-1 to 31-n is up-sampled by the interpolator circuit (ITPL3) 43 (for example 128KHz) to be input to D/A 42. The output of the D/A 42 is smoothed by the post filter (Post) 41 and is added with the output of the terminal impedance synthesizing filter (HZA) 45 to which synthesizing function of real number portion of the terminal impedance is fed back by the adder 44, and then output to the input of the voltage/current converting circuit (gm) 40. The output of the voltage/current converting circuit (gm) 40 is input to the driver circuit (DRV) 34 having non-inverting output and inverting output of current input voltage output type. The driver circuit (DRV) 34 drives the Tip terminals 32-1 to 32-n and the Ring terminal 33-1 to 33-n via the resistors (Rt) 46 and (Rr) 47.

The DSP constructed for receiving and re-writing coefficient values of various digital filters multiplexed in the PCM signal from the superior unit, and can take out and calculate coefficient necessary for actual arithmetic operation corresponding to respective circuits (respective channels).

Here, the differential amplifier circuit 3 and the driver circuit 4 of Fig. 1 respectively correspond to the differential signal detection circuit (diff) 35 and the driver circuit (DRV) 34 of Fig. 2. The A/D 5, the D/A 6, the multiplexing circuit 12 and the separation circuit 13 of Fig. 1 respectively correspond to the A/D 38, the D/A 42, the multiplexer (MUX) 52 and demultiplexer (DMUX) 63 of Fig. 2. The digital signal processing circuits 14 and 15 of Fig. 1 correspond to a circuit formed by omitting the MUX 52 and the DMUX 63 from low voltage LSI 51 of Fig. 2.

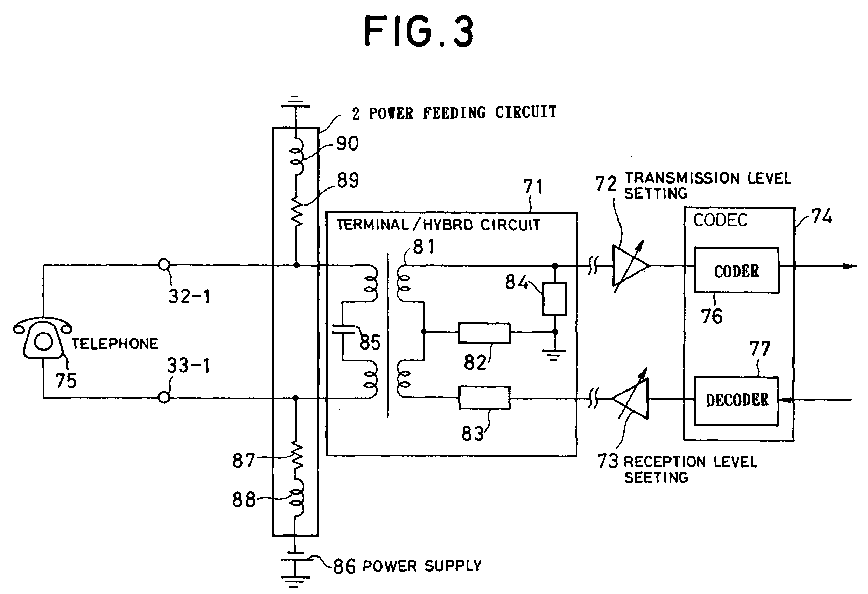

In the high voltage LSIs 31-1 to 31-n of Fig. 2, the power feeding circuit 2 is omitted from illustration. Next, discussion will be given for the power feeding circuit 2. Fig. 3 is a partial circuit diagram of the subscriber line interface circuit including the power feeding circuit. Referring to Fig. 3, the subscriber line interface circuit is constructed with the power feeding circuit 2, a terminal hybrid circuit 71, a transmission level setting circuit 72, a reception level setting circuit 73 and a CODEC 74.

Amongst, what is not illustrated in Fig. 2 is the power feeding circuit 2 and a telephone set 75 of Fig. 3. The terminal hybrid circuit 71 of Fig. 3 corresponds to a circuit from the TIP terminals 32-1 and the Ring terminals 33-1 to the differential signal detection circuit (diff) 35 and the driver circuit (DRV) 34. The transmission level setting circuit 72 of Fig. 3 corresponds to the reception gain adjusting circuit (Rgain) 58 of Fig. 2. The CODEC 74 of Fig. 3 corresponds to the transmission channel filter (Xch) 55, the A/µ code compressor (Comp) 56, the reception channel filter (Rch) 60 and the expander (Exp) 57 of Fig. 2. More particularly, the CODEC 74 of Fig. 3 is constructed with a coder 76 and a decoder 77. In the coder 76, the transmission channel filter (Xch) 55 and the A/µ code compressor (Comp) 56 are included, and in decoder 77, the reception channel filter (Rch) 60 and the expander (Exp) 57 are included. In Fig. 3, other components common to those shown in Fig. 2, are omitted.

Referring to Fig. 3, the terminal hybrid circuit 71 is constructed with a transformer 81, impedance elements 82 to 84 and a capacitor 85. For convenience of disclosure, one side of the transformer 81 connected to the capacitor will be hereinafter referred to as primary side and the other side of the transformer 81 connected to the impedance elements 82 to 84 is referred to as secondary side. On the primary side of the transformer, the power feeding circuit 2 is connected. The power feeding circuit 2 is constructed with a series connection circuit of a power source 86, a resistor 87 and a coil 88 and a series connection circuit of a resistor 89 and a coil 90. To the other end of the coil 88, the power source 86 is connected. The other end of the coil 90 is grounded. On the other hand, the series connection circuit of the resistor 87 and the coil 88 is connected in series to the series connection circuit of the resistor 89 and the coil 90 via the primary side coil and the capacitor 85 of the transformer 81. It should be noted that the capacitor is provided for blocking direct current component.

Then, a power source current flows in a direction of the series connection circuit of the resistor 89 and the coil 90, the Tip terminal 32-1, the telephone set 75, the Ring terminal 33-1, the series connection circuit of the resistor 87 and the coil 88 and the power source 86 to supply power to the telephone set 75. On the other hand, the signal from the superior unit is transmitted to the telephone set 75 through the transformer 81, and the signal from the telephone set 75 is transmitted to the superior unit via the transformer 81. Accordingly, the telephone set 75 can receive both of power supply and signals.

Next, discussion will be given for the second embodiment of the subscriber line interface circuit according to the present invention. the high voltage LSI employing a mixed technology including a low voltage CMOS transistor circuit and a high voltage transistor circuit may be fabricated by BiCOMS (Bipolar-CMOS) or BCD (Bipolar-CMOS-DMOS) process technology in place of SOI (Silicon on Insulator).

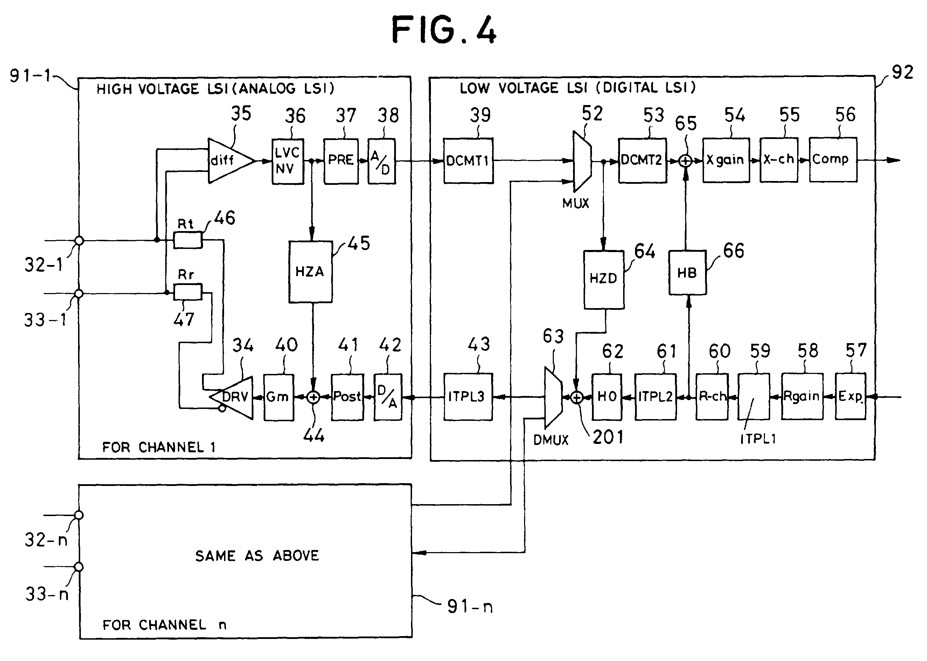

Next, discussion will be given for the third embodiment of the subscriber line interface circuit according to the present invention. Fig. 4 is a block diagram showing the third embodiment of the subscriber line interface circuit according to the invention. In the first embodiment (see Fig. 2), the decimation circuit (DCMT1) 39 is arranged in the high voltage LSI 31-1, the decimation circuit (DCMT1) may be arranged on the side of the low voltage LSI 92. Also, the interpolator circuit 43 may be arranged on the side of the low voltage LSI 92 instead of the side of the high voltage LSI 31-1. The reason is that the signals flowing between the A/D 38 and the decimation circuit (DCMT1) 39 and between the D/A 42 and the interpolator circuit (ITPL3) 43 are digital signals.

Next, discussion will be given for the fourth embodiment. It may be possible to arrange the high voltage LSIs 31 and 91 including the low voltage CMOS transistor circuit and the high voltage transistor circuit, and the low voltage LSIs 51 and 92 on separate printed boards, instead of mounting on the same printed board.

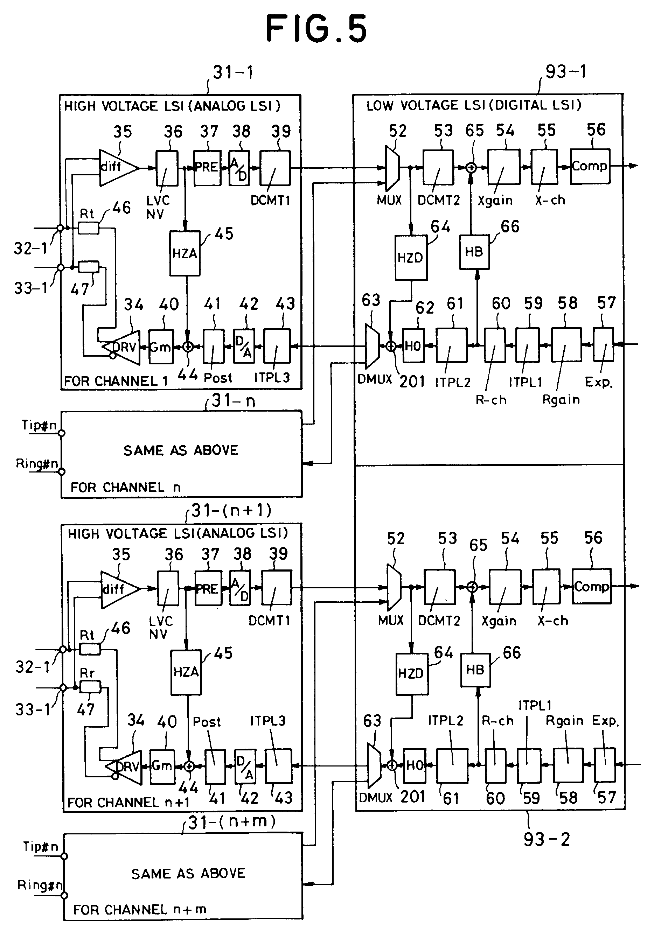

Next, the fifth embodiment will be discussed. The low voltage LSIs 51 and 92 has a construction to have not only one DSP core in each one of the LSIs 51 and 92 but also a plurality of DSP cores having input/output circuit per DSP core block in each one of LSIs 51 and 92. Fig. 5 shows a construction of the fifth embodiment of the subscriber line interface circuit according the invention. Referring to Fig. 5, the low voltage LSI 93 includes a DSP core 93-1 for channels 1 to n and a DSP core 93-2 for channels (n+1) to (n+m). Here, m is integer greater than or equal to 2.

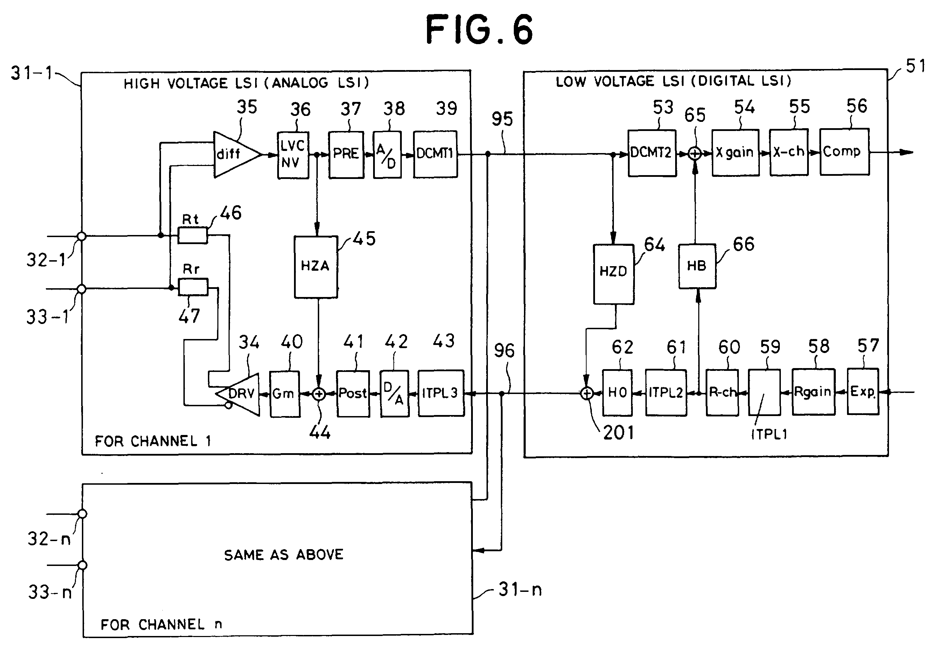

Next, discussion will be given for the sixth embodiment. As a multiplexing circuit of the input/output signal of a circuit on the channel realized by the high voltage LSIs 51 and 92, a bus construction may be taken instead of the multiplexer (MUX) 52 and demultiplexer (DMUX) 63. Fig. 6 is a block diagram showing the sixth embodiment of the subscriber line interface circuit according to the present invention. Fig. 6 shows a connection between the low voltage LSI 31 and the high voltage LSI 51 in bus construction. Namely, the output of the decimation circuit (DCMT1) 39 of the high voltage LSIs 31-1 to 31-n for channels 1 to n are input to decimation circuit (DCMT2) 53 of the low voltage LSI 51 via the same transmission channel 95. The output of the adder 64 of the low voltage LSI 51 is input to the interpolator circuit (ITPL3) of the high voltage LSIs 31-1 to 31-n for channels 1 to n via the same transmission channel 96.

It should be noted that, in order to realize the bus construction, it becomes necessary to preliminarily control transmission of the digital signal. At first, concerning the digital signal transmitted from the high voltage LSI 31 to the low voltage LSI 51, the digital signal from the channel 1 is transmitted from the high voltage LSI 31-1 to the low voltage LSI 51 at a timing t1, and the digital signal from the channel n is transmitted from the high voltage LSI 31-n to the low voltage LSI 51. Here, t1 < tn.

Concerning the digital signal transmitted from the low voltage LSI 51 to the high voltage LSI 31, the digital signal from the channel 1 is transmitted from the low voltage LSI 51 to the high voltage LSI 31-1 at a timing t1, and the digital signal from the channel n is transmitted from the low voltage LSI 51 to the high voltage LSI 31-n. Here, t1 < tn.

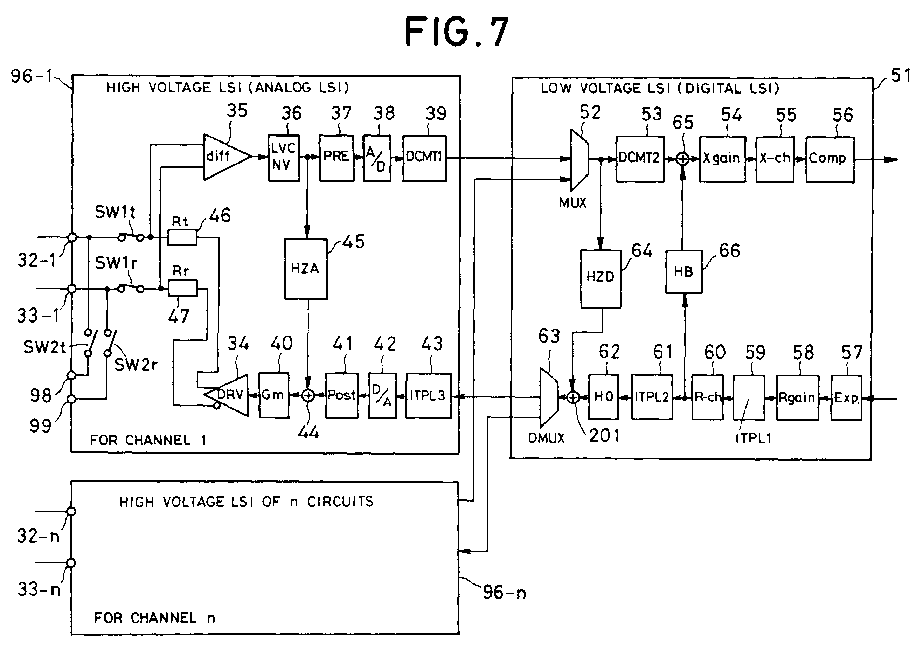

Next, discussion will be given for the seventh embodiment of the subscriber line interface circuit according to the invention. A circuit on the side of the channel realized by the high voltage LSIs 31 and 91 may be constructed by adding a switch pair SW1t and SW1r for opening a channel for transmitting a call signal for notifying reception of call to the subscriber and call signal transmission switch pair SW2t and SW2r to be branch connection on the side of the channel of the switch pair SW1t and SW1r. Fig. 7 is a block diagram showing the seventh embodiment of the subscriber line interface circuit according to the invention. As shown in Fig. 7, between the resistor (Rt) 46b of the high voltage LSI 96-1 and the Tip terminal 32-1, the switch SW1t opening the channel is connected. Also, between the resistor (Rr) 47 and the Ring terminal 33-1, the switch SW1r opening the channel is connected. Between the Tip terminal 32-1 of the high voltage LSI 96-1 and a terminal 98, the call signal transmission switch SW2t is connected. Between the Ring terminal 33-1 and a terminal 99, the call signal transmission switch SW2r is connected.

Next, discussion will be given for the eighth embodiment of the subscriber line interface circuit according to the invention. In the discussion of the first embodiment, it has been stated that " The DSP constructed for receiving and re-writing coefficient values of various digital filters multiplexed in the PCM signal from the superior unit, and can take out and calculate coefficient necessary for actual arithmetic operation corresponding to respective circuits (respective channels)." The particular construction of the foregoing modification will be discussed as the eighth embodiment. Fig, 8 is a block diagram of the eighth embodiment of the subscriber line interface circuit according to the invention. On the input side of the expander (Exp) 57 of the low voltage LSI 51, n in number of memories 25-1 to 25-n are connected for respective channels. The memories 25-1 to 25-n and the expander (Exp) 57 are connected by one bus 26. On the other hand, to the digital signal (namely, PCM signal) for respective channels from the superior unit, program codes re-writeable of coefficient value of the digital filter is multiplexed. For example, when the digital signal for the channel 1 is input to the expander (Exp) 57 of the low voltage LSI 51, the memory 25-1 for the channel 1 is retrieved by the program code multiplexed in the digital signal to read out the coefficient values of various digital filters for the channel 1. Similarly, when the digital signal for the channel n is input to the expander (Exp) 57 of the low voltage LSI 51, the memory 25-n for the channel n is retrieved by the program code multiplexed in the digital signal to read out the coefficient values of various digital filters for the channel n. The coefficient values are respectively set to the digital filter. The digital filter means all components except for the multiplexer (MUX) 52 and the demultiplexer (DMUX) 63 of the low voltage LSI 51. Accordingly, it becomes possible to perform unique digital process by the low voltage LSI 51.

As set forth above, in accordance with the present invention, there is provided a subscriber line interface circuit which comprises a first integrated circuit including speaking power supply means for supplying an electrical power to a telephone set and A/D converter means for converting an analog voice signal output from the telephone set into a digital signal, the first integrated circuit being independent for each channel, and a single second integrated circuit including multiplexing multiplexing the digital signal from the A/D converter means of each of the first integrated circuit and digital signal processing means for digital-signal-processing of the multiplexing means.

On the other hand with the present invention, there is provided a subscriber line interface circuit comprises a first integrated circuit separately provided for each channel and including signal driving means for driving an analog voice signal from a former stage to transmit to a telephone set and an D/A converter for converting a digital signal from a former stage into an analog voice signal for feeding to the signal driving means, and a second single second integrated circuit including operating means for separating a digital multiplexed signal from a former stage into each signal for each channel for feeding to each of the D/A converters and digital signal processing means for performing digital signal processing of the digital multiplexed signal from a former stage for feeding to the separating means.

Particularly, it is the first effect of the present invention to enable talking all of the analog circuit portion in the high voltage LSI by constructing the A/D and D/A converters of the low voltage portion and the high voltage LSI simultaneously to realize a construction free of cross talk from the analog circuit of other channels. Also, the common portion of the LSI can be digital circuit to facilitate circuit design, layout design to contribute for down-sizing of the overall circuit. Also, by concentrating the analog circuit in the high voltage LSI, analog signal between the LSIs can be avoided to successfully lower sensitivity to the noise.

The second effect of the present invention is that the call signal control switch required high voltage beyond the high voltage power feeding circuit can be realized by the same high voltage LSI, Thus, the call signal transmitting switch which is typically relay and functions corresponding to a test relay can be realized at low cost.

Although the present invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodied within a scope encompassed and equivalents thereof with respect to the feature set out in the appended claims.

## Claims

1. A subscriber line interface circuit comprising:
a first integrated circuit including speaking power supply means for supplying an electrical power to a telephone set and A/D converter means for converting an analog voice signal output from said telephone set into a digital signal, said first integrated circuit being independent for each channel; and
a single second integrated circuit including multiplexing means for multiplexing multiplexing said digital signal from said A/D converter means of each of said first integrated circuit and digital signal processing means for digital-signal-processing of the multiplexing means.

2. A subscriber line interface circuit as set forth in claim 1, wherein said first integrated circuit is constructed with a high voltage LSI and said second integrated circuit is constructed with a low voltage LSI.

3. A subscriber line interface circuit as set forth in claim 1, wherein said A/D converter means is constructed with an A/D converter for converting an analog voice signal into a digital signal and a decimation circuit for thinning an output of said A/D converter with down-sampling.

4. A subscriber line interface circuit as set forth in claim 1, wherein said A/D converter means is constructed with an A/D converter for converting an analog voice signal into a digital signal, and said multiplexing means is constructed with a decimation circuit per channel for thinning an output of said A/D converter of said first integration circuit with down-sampling, and a multiplexing circuit for multiplexing outputs of respective decimation circuits.

5. A subscriber line interface circuit as set forth in claim 1, wherein said second integration circuit includes a plurality of pairs of said multiplexing means and said digital signal processing means.

6. A subscriber line interface circuit as set forth in claim 1, wherein a connection between said A/D converter means and said digital signal processing means is a bus construction in place of said multiplexing means.

7. A subscriber line interface circuit as set forth in claim 1, wherein said first integrated circuit is provided with a switch pair for opening a channel and a ringing signal sending switch pair in branch connection on the side of said channel of said switch pair.

8. A subscriber line interface circuit comprising:
a first integrated circuit separately provided for each channel and including signal driving means for driving an analog voice signal from a former stage to transmit to a telephone set and an D/A converter for converting a digital signal from a former stage into an analog voice signal for feeding to said signal driving means; and
a second single second integrated circuit including separating means for separating a digital multiplexed signal from a former stage into each signal for each channel for feeding to each of said D/A converters and digital signal processing means for performing digital signal processing of the digital multiplexed signal from a former stage for feeding to said separating means.

9. A subscriber line interface circuit as set forth in claim 8, wherein said first integration circuit is constructed with a high voltage LSI and said second integration circuit is constructed with a low voltage LSI.

10. A subscriber line interface circuit as set forth in claim 8, wherein said D/A converting means is constructed with a D/A converter converting the digital signal into the analog voice signal, and an interpolator circuit up-sampling the output from said separation means with interpolation for feeding to said D/A converter.

11. A subscriber line interface circuit as set forth in claim 8, wherein said D/A converting means is constructed with a D/A converter converting the digital signal into the analog voice signal, said separation means is constructed with said interpolation circuit up-sampling an output from the former stage with interpolation for feeding to said D/A converter and a separation circuit for separating a digital multiplexed signal from the former stage per channel for feeding to said interpolator circuit.

12. A subscriber line interface circuit as set forth in claim 8, wherein said second integration circuit includes a plurality of pairs of said separation means and said digital signal processing means.

13. A subscriber line interface circuit as set forth in claim 8, wherein a connection between said separation circuit and said digital signal processing means is established by a bus construction in place of said separation means.

14. A subscriber line interface circuit as set forth in claim 8, wherein said first integration circuit is provided with a switch pair for opening a channel and a ringing signal switch pair in branch connection on the side of said channel of said switch pair.

15. A subscriber line interface circuit as set forth in claim 8, wherein said digital signal processing means is connected with storage means per each channel, in said storage means, a coefficient of various digital filters unique to each channel to be used in said digital signal processing means, and a coefficient value of various digital filter means unique to each channel, in the signal from the former stage, a program code re-writeable of is multiplexed.

16. A subscriber line interface circuit constituted of a combination of the subscriber line interface circuit set forth in claim 1 and the subscriber line interface circuit set forth in claim 8.

17. A subscriber line interface circuit constituted of a combination of the subscriber line interface circuit set forth in claim 2 and the subscriber line interface circuit set forth in claim 9.

18. A subscriber line interface circuit constituted of a combination of the subscriber line interface circuit set forth in claim 3 and the subscriber line interface circuit set forth in claim 10.

19. A subscriber line interface circuit constituted of a combination of the subscriber line interface circuit set forth in claim 4 and the subscriber line interface circuit set forth in claim 11.

20. A subscriber line interface circuit constituted of a combination of the subscriber line interface circuit set forth in claim 5 and the subscriber line interface circuit set forth in claim 12.

21. A subscriber line interface circuit constituted of a combination of the subscriber line interface circuit set forth in claim 6 and the subscriber line interface circuit set forth in claim 13.

22. A subscriber line interface circuit constituted of a combination of the subscriber line interface circuit set forth in claim 7 and the subscriber line interface circuit set forth in claim 14.
